# FASCICULE DE BREVET EUROPEEN

(11) **EP 0 719 916 B1**
(45) Date de publication et mention de la délivrance du brevet: **12.07.2000**
(21) Numéro de dépôt: 95402921.1
(22) Date de dépôt: 22.12.1995
(51) Int. Cl.: F02B 47/08, F02B 17/00

(54) **Procédé et dispositif améliorés de recyclage de gaz d'échappement à l'admission d'un moteur quatre temps à allumage commandé**
Verfahren und Vorrichtung zur Abgasrückführung für eine 4-Takt Brennkraftmaschine mit Fremdzündung
Method and device for recirculating exhaust gas for a spark ignited 4-cycle engine

(30) Priorité: 29.12.1994 FR 9416036
(43) Date de publication de la demande: 03.07.1996
(73) Titulaire: INSTITUT FRANCAIS DU PETROLE, 92500 Rueil Malmaison (FR)
(72) Inventeur: Castagne, Michel, F-91120 Palaiseau (FR); Gatellier, Bertrand, F-92100 Boulogne (FR); Henriot, Stéphane, F-94400 Saint-Maurice (FR)

(56) Documents cités:
- EP-A- 0 594 462
- DE-A- 2 611 806
- DE-A- 3 828 742
- FR-A- 638 882
- GB-A- 2 073 320
- US-A- 4 193 382
- US-A- 4 413 593
- US-A- 4 667 636
- US-A- 5 322 043

## Description

La présente invention concerne le domaine des moteurs quatre temps à allumage commandé, et plus particulièrement des moteurs pouvant fonctionner avec un recyclage des gaz d'échappement dans le ou les conduit(s) d'admission.

Ce mode de fonctionnement appelé couramment EGR (abréviation de Exhaust Gas Recycling) est bien connu de l'homme de l'art et permet une amélioration des performances du moteur notamment au niveau des émissions de polluants. Les brevets US 3 765 272, US 3 911 674, US 3 982 395 ou US 4 026 256 relatent le domaine public relatif à cette technique.

Le brevet US 4 193 382 présente aussi un moteur de ce type dans lequel les gaz recyclés sont orientés au centre de la chambre de combustion et le mélange carburé en périphérie, à proximité de la bougie.

La recirculation d'une partie des gaz d'échappement à l'admission doit faire l'objet d'amélioration constantes afin de satisfaire aux futures normes anti-pollutions relatives notamment aux émissions d'oxydes d'azote, en Europe et dans la plupart des pays industrialisés, notamment pour les moteurs de type Diesel.

L'utilisation du recyclage d'une partie des gaz d'échappement à l'admission est déjà devenue un processus courant. Elle nécessite une aérodynamique adaptée et d'assez forte intensité pour que la combustion s'initie et se propage dans de bonnes conditions. Il est maintenant courant de rencontrer des moteurs 4 temps à allumage commandé fonctionnant avec de l'EGR introduit de manière homogène à l'admission. Ces moteurs ne sont cependant en général pas conçus autour de l'utilisation de l'EGR et les taux de recyclage y sont faibles et les gaz d'échappement sont introduits bien en amont de la chambre de combustion.

Les moteurs conçus dès le départ pour fonctionner avec de forts taux d'EGR sont rares et la plupart au stade de prototype. Pour réaliser ces taux, une stratification de la chambre de combustion est nécessaire entre une zone avec gaz recyclés et une zone contenant le mélange air-carburant, dans laquelle aura lieu l'allumage. Cette stratification est cependant très difficile à réaliser quand le débit de gaz entrant dans chaque cylindre est faible, et on peut être amené à revenir, pour ces plages de fonctionnement, à la solution de l'EGR homogène, en recherchant alors des gains en consommation par une augmentation de la vitesse de combustion par l'aérodynamique.

Une voie de recherche a mis en évidence l'importance de la stratification des gaz recyclés. Le document SAE 940 482 intitulé "lmproving the NOₓ/fuel economy trade-off for gasoline engines with the CCVS combustion system" décrit un système d'admission variable qui permet d'augmenter le mouvement tourbillonnaire des gaz dans la chambre de combustion, tout en y conservant une stratification. La stratification peut être réalisée en introduisant les gaz recyclés dans un seul conduit d'admission et le mélange carburé dans l'autre conduit d'admission.

L'amélioration du mouvement tourbillonnaire peut aussi être obtenue à l'aide d'une distribution variable, en diminuant la levée des soupapes et éventuellement en prévoyant un déflecteur dans la chambre de combustion elle-même, ce qui impose à l'air de circuler selon un trajet préféré, à l'extérieur des conduits.

Il est encore connu, par le même document SAE précité, de séparer longitudinalement le conduit d'admission en deux parties et d'y prévoir un déflecteur mobile capable d'obturer, à certains moments du cycle de fonctionnement, l'une des deux parties afin de diriger le fluide vers l'autre partie, préférentiellement située sur l'extérieur de la courbure du conduit d'admission. Le document EP-A1-0 551 209 divulgue un système analogue.

Diverses solutions ont déjà été proposées soit afin de stratifier les gaz, soit afin de créer un mouvement tourbillonnaire des gaz recyclés, soit en vue de combiner les deux effets.

Par ailleurs on a déjà proposé un moteur à 2 soupapes d'admission par cylindre ayant un système d'admission variable destiné à augmenter le mouvement de tumble dans la chambre de combustion lorsque le moteur fonctionne en mélange stratifié. Cette aérodynamique permet en effet de conserver dans la chambre de combustion la stratification réalisée lors de la phase d'admission en introduisant les gaz brûlés dans un conduit d'admission et le mélange air-carburant dans l'autre. L'augmentation du tumble est réalisée soit à l'aide d'une distribution variable en diminuant la levée des soupapes, un déflecteur dans la chambre de combustion imposant alors à l'air de circuler sur la partie supérieure des conduits, soit en séparant les conduits en deux par une languette et en fermant la moitié inférieure des conduits par un demi papillon.

Deux demandes de brevets européens sur le concept d'EGR stratifié revendiquant les deux types de stratifications ont été publiées : la première est une stratification "temporelle" (EP 0594463) avec une ouverture décalée des soupapes admission/échappement à faible charge et/ou une ouverture phasée dans le cycle de la vanne d'échappement, la seconde (EP 0594462) est une stratification "spatiale" avec injection de l'EGR dans un des deux conduits admission, et injection du mélange air-carburant dans l'autre.

Le premier document enseigne un contrôle individualisé de l'entrée d'EGR sur chaque cylindre, avec une vanne dédiée, principe complexe et onéreux.

Le second document ne précise pas la géométrie des conduits ou de la chambre de combustion. Il n'envisage pas la stratification à l'intérieur du conduit. Enfin il est intéressant de noter qu'aux faibles taux d'EGR, à charge partielle, le concept est présenté comme un concept "EGR homogène", l'EGR se mélangeant avec l'air dans la chambre de combustion du fait d'une dissymétrie de l'écoulement créant un mouvement de rotation dans la chambre de combustion.

Rappelons que les moteurs fonctionnant avec une stratification des gaz d'échappement recyclés souffrent aussi d'un manque d'adaptation aux différentes conditions de fonctionnement du moteur. Les stratifications obtenues privilégient toujours une certaine plage de fonctionnement aux dépens des autres plages pour lesquelles la stratification n'existe plus.

On notera aussi que les diverses solutions de recyclage des gaz d'échappement proposées sont en général pénalisées par des temps de réponse importants aux variations de fonctionnement du moteur, à cause d'une introduction des gaz recyclés loin en amont du moteur.

La présente invention propose une solution aux problèmes énoncés ci-dessus en prévoyant notamment une adaptation du fonctionnement aux différentes conditions de fonctionnement du moteur, et en permettant une introduction des gaz brûlés à une faible distance du moteur.

En outre la présente invention permet un meilleur contrôle de la répartition des différents gaz à l'intérieur de la chambre de combustion, quelles que soient les conditions de fonctionnement.

Une optimisation du mouvement des différents gaz circulant dans la chambre de combustion est obtenue selon l'invention.

Ainsi la présente invention concerne un procédé de recyclage de gaz d'échappement à l'admission d'un moteur 4 temps à allumage commandé selon la revendication 1.

Plus précisément on crée, dans la chambre de combustion, une stratification selon laquelle une zone contenant de l'air est intercalé entre une zone contenant le mélange carburé et une zone contenant les gaz recyclés.

Selon l'invention, le mouvement général des gaz dans la chambre de combustion est une rotation autour d'un axe perpendiculaire à l'axe longitudinal de la chambre de combustion, mouvement dit de tumble.

De façon avantageuse, ledit mouvement de tumble dans la chambre permet de maintenir une stratification latérale (ou séparation) des différentes espèces lors de la phase de compression. L'introduction des gaz recyclés peut d'ailleurs renforcer ce mouvement.

Selon un premier mode de réalisation de l'invention, les gaz recyclés occupent une zone située autour de l'axe de rotation des gaz dans la chambre de combustion.

Selon un mode particulier de réalisation de l'invention, les gaz recyclés (EGR) sont véhiculés dans un premier conduit d'admission simultanément à de l'air, et un mélange carburé passe à travers un deuxième conduit d'admission, de telle façon que le mélange carburé occupe environ la moitié de la chambre de combustion, l'autre moitié étant occupée à la fois par de l'air et des gaz recyclés stratifiés.

Selon un autre mode de réalisation de l'invention, les gaz recyclés (EGR) sont véhiculés dans deux conduits d'admission, l'un au moins desdits conduits véhiculant par ailleurs un mélange carburé.

Sans sortir du cadre de l'invention, le mouvement général des gaz dans la chambre de combustion peut être une rotation autour de l'axe longitudinal de la chambre de combustion, mouvement dit de swirl.

Une stratification radiale ou longitudinale peuvent alors être créées dans la chambre de combustion.

Dans le cas d'une stratification longitudinale les gaz recyclés sont préférentiellement véhiculés dans une zone interne du conduit d'admission relativement au rayon de courbure.

Dans le cas d'une stratification radiale ils sont préférentiellement véhiculés dans la partie du conduit d'admission débouchant le plus à l'extérieur de la chambre de façon à se placer à la périphérie de cette dernière et éventuellement à renforcer le mouvement de swirl.

L'invention vise en outre un dispositif destiné au recyclage de gaz d'échappement à l'admission d'un moteur 4 temps à allumage commandé. Selon la revendication 13.

Selon un mode particulier de réalisation de l'invention, ledit moyen comprend un papillon dont l'axe coupe perpendiculairement l'axe longitudinal de l'un au moins des conduits d'admission.

Selon un autre aspect de l'invention le moyen d'admission comprend en outre un élément de séparation longitudinale du conduit placé, à certains moments du fonctionnement, dans le prolongement du papillon.

Sans sortir du cadre de l'invention, ledit moyen comprend deux demi-volets chacun mobile autour d'un axe qui coupe perpendiculairement l'axe longitudinal de l'un au moins desdits conduits d'admission.

Avantageusement, ledit moyen de séparation et de guidage comprend au moins un volet à axe pariétal perpendiculaire à l'axe longitudinal du conduit d'admission, et disposé au point de jonction de la tubulure des gaz recyclés et du conduit d'admission, ledit volet permettant de contrôler le débit de gaz recyclés entrant dans la chambre de combustion.

Ainsi, selon l'invention, de l'air peut être intercalé entre le mélange carburé et l'EGR, les gaz recyclés étant alors à la périphérie du cylindre. Ceci permet d'éviter le mélange des gaz recyclés avec le carburant et d'obtenir ainsi une combustion plus rapide.

D'autres caractéristiques, avantages et améliorations de l'invention apparaîtront mieux à la lecture de la description qui va suivre faite à titre illustratif et nullement limitatif en référence aux dessins annexés sur lesquels :
- La figure 1 est une coupe schématique transversale d'un moteur équipé d'un dispositif selon un mode de réalisation de l'invention;
- Les figures 2 à 4 sont des coupes schématiques transversales d'un moteur selon d'autres modes de réalisation de l'invention;
- Les figures 5A et 5B sont deux coupes montrant plus en détail un dispositif selon l'un des modes de réalisation de l'invention;
- La figure 6 est une coupe schématique transversale d'un moteur ayant une introduction de carburant dans chaque conduit d'admission, équipé d'un dispositif selon l'invention.
- La figure 7 est une coupe schématique longitudinale d'un moteur équipé d'un dispositif selon l'invention;
- Les figures 8A et 8B sont des coupes transversales d'une conduite d'admission séparée conformément à l'invention; et
- La figure 9 est une coupe transversale d'un cylindre comportant une stratification radiale obtenue selon l'invention.

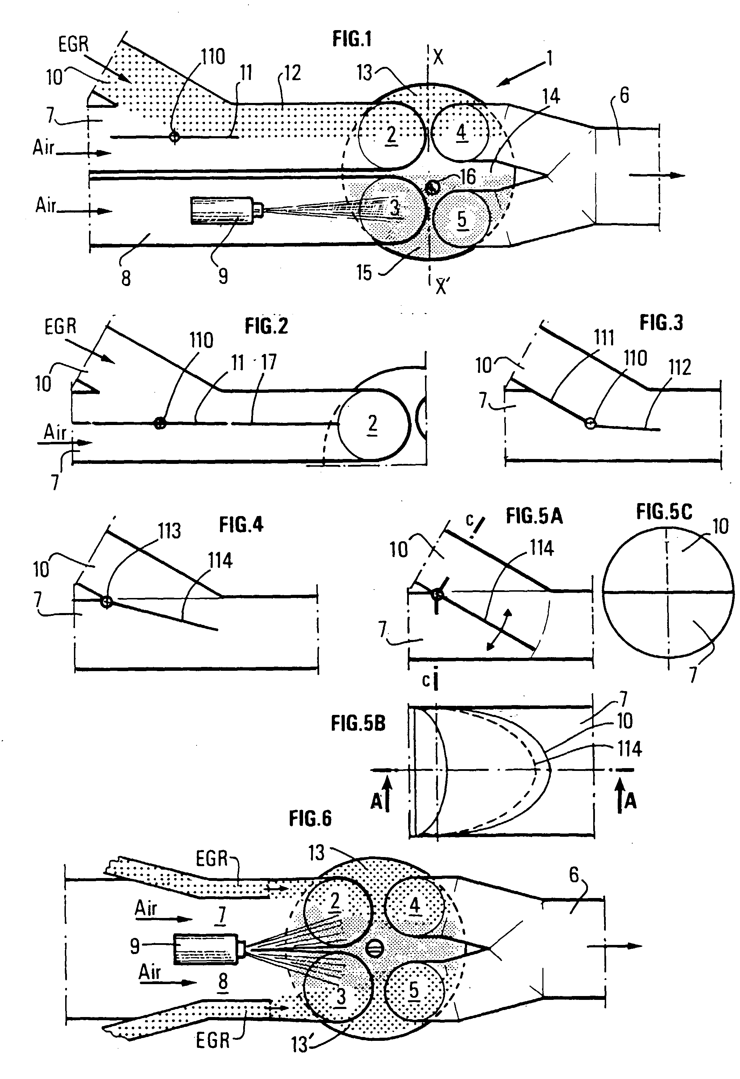

Sur la figure 1 apparaît en coupe transversale un cylindre au niveau de la chambre de combustion 1 d'un moteur, ayant deux ouvertures d'admission 2, 3 et deux ouvertures d'échappement 4, 5. Un conduit d'échappement 6 permet d'évacuer les gaz issus de la combustion en dehors de la chambre de combustion.

Le moteur comprend deux conduits d'admission 7, 8 débouchant respectivement aux deux ouvertures 2, 3.

Un injecteur de carburant 9 peut être placé dans l'un des conduits d'admission 8 qui alimente la chambre de combustion en mélange carburé, de l'air étant de façon classique mélangé au carburant.

Une arrivée 10 de gaz recyclés depuis l'échappement (EGR) débouche dans l'un au moins des conduits d'admission 7, 8, juste en amont d'une ouverture d'admission.

Selon la figure 1, un moyen 11 est placé dans le conduit d'admission 7 où débouche l'arrivée 10 de gaz recyclés. Le moyen 11 est destiné à faire circuler les gaz recyclés dans une zone particulière 12 du conduit 7 et à les guider jusque dans une zone spécifique 13 de la chambre de combustion 1. Le reste de la section de passage du conduit 7 est traversé, selon cet exemple de réalisation de l'invention, par de l'air qui grâce au moyen 11 est dirigé jusque dans la chambre de combustion 1 où il est juxtaposé à la zone spécifique 13, dans une zone 14.

Le mélange carburé occupe alors une zone 15 qui correspond ici à la moitié de la chambre de combustion, et une bougie d'allumage 16 est préférentiellement placée dans la zone 15.

Ainsi selon l'invention, on réalise dans la chambre de combustion 1 une stratification dite latérale selon laquelle le ou les plan(s) de séparation entre les différentes strates ou couches de compositions différentes, sont parallèle(s) à l'axe longitudinal du cylindre.

Plus précisément la stratification dans la chambre de combustion 1 comprend selon le mode de réalisation de la figure 1, respectivement trois zones:
- la zone 13 riche en gaz recyclés située en périphérie de la chambre de combustion.
- la zone 14 contenant essentiellement de l'air et
- la zone 15 où évolue le mélange carburé.

Un mouvement général dit de tumble c'est-à-dire de rotation autour d'un axe XX' perpendiculaire à l'axe longitudinal du cylindre, est créé dans la chambre de combustion. Ce mouvement de tumble permet de garder une stratification telle qu'évoquée ci-dessus, notamment dans certaines phases de fonctionnement du moteur.

Cette séparation particulière des espèces peut être obtenue grâce notamment au fait qu'en amont de la chambre de combustion c'est-à-dire déjà dans l'un au moins des conduits d'admission 7, le moyen 11 permet de séparer et de diriger les gaz recyclés EGR et l'air.

Le moyen 11 tel que représenté sur la figure 1 est une vanne papillon de forme préférentiellement allongée, dont l'axe 110 est placé transversalement et à l'intérieur du conduit 7, près de l'endroit où débouchent les gaz recyclés, de sorte que le moyen 11 peut guider les gaz recyclés dès qu'ils arrivent dans le conduit d'admission 7.

L'angle d'ouverture du papillon 11 peut être contrôlé par tout moyen connu en soi, en fonction des conditions de fonctionnement du moteur, de sorte que le taux de gaz recyclés dans le conduit d'admission peut avantageusement varier pour occuper de 0 à 100% de la section du conduit 7.

Sur la figure 2 sont représentés mais non référencés substantiellement les mêmes éléments que sur la figure 1, à l'exception de la référence 17 qui symbolise un élément de séparation fixe à l'intérieur du conduit d'admission 7, préférentiellement dans le prolongement de la vanne-papillon 11 décrite ci-avant. L'élément 17, utilisé en combinaison avec l'élément 11 permet d'améliorer le guidage et la séparation des gaz recyclés puisque ces derniers sont ici guidés quasiment depuis leur introduction dans le conduit 7 jusqu'à leur entrée dans la chambre de combustion 1.

Sans sortir du cadre de l'invention, l'élément 17 peut être plus court que représenté sur la figure 2.

Selon la figure 3, le moyen 11 se présente sous la forme de deux demi-volets 111 et 112 chacun mobile en rotation autour d'un axe tel que 110 déjà décrit. Le premier demi-volet 111 guide les gaz recyclés dès leur entrée dans le conduit 7, tandis que le deuxième demi-volet 112 guide et sépare plutôt longitudinalement les gaz dans la partie du conduit 7 la plus proche de l'ouverture d'admission correspondante 2. Le moyen (110, 111, 112) illustré sur la figure 3 permet de moduler le taux de gaz recyclés en faisant varier la position de chacun des demi-volets, tout en les dirigeant spécifiquement en périphérie de la conduite d'admission 7.

La figure 4 montre un mode de réalisation de l'invention selon lequel le moyen 11 comprend un axe 113 situé au point de jonction de la tubulure 10 pour les gaz recyclés et du conduit d'admission 7.

Un unique volet appelé volet pariétal 114 est mobile en rotation autour de l'axe 113, et peut donc se déplacer entre deux positions extrêmes l'une obturant le conduit 7 l'autre le conduit 10 à condition bien entendu que les conduits aient une même section. Préférentiellement le volet 114 est elliptique comme montré sur les figures 5A et 5B.

Les modes de réalisation de l'invention qui viennent d'être décrits permettent avantageusement de ne pas perturber l'aérodynamique des gaz en mouvement, tant en amont de la chambre de combustion que dans la chambre elle-même. Il n'existe en particulier aucune restriction brusque de la section de passage des gaz.

Le volet pariétal décrit ci-dessus, en assurant efficacement et à lui seul une fonction de régulation du débit des gaz recyclés, peut permettre de supprimer tout autre moyen de régulation tel que par exemple les vannes de régulation placées classiquement sur les conduites de liaison entre l'échappement et l'admission.

Il peut aussi éventuellement permettre d'utiliser une vanne très simplifiée, de type tout ou rien, placée en amont et destinée à laisser passer ou non les gaz recyclés, de sorte que ledit volet 114 assure un contrôle du débit d'EGR qui entre dans la chambre de combustion.

Un contrôle individuel du déplacement de chaque moyen 11 au niveau de chaque cylindre peut être prévu, ou bien un contrôle unique peut être prévu pour tous les cylindres du moteur.

La figure 6 illustre schématiquement le cas où du mélange carburé arrive dans la chambre de combustion 1 via deux conduits d'admission 7, 8. Un injecteur unique (bi-jet) 9 peut alors être prévu ou bien on peut envisager de placer un injecteur dans chaque conduit (7, 8).

Les gaz recyclés peuvent arriver, selon ce mode de fonctionnement de l'invention, dans les deux conduits simultanément, de la façon caractéristique décrite ci-avant pour former deux zones (13, 13') périphériques symétriques dans la chambre de combustion.

La bougie d'allumage 16 est préférentiellement placée près de l'axe central de la chambre de combustion 1 puisqu'il existe une symétrie d'ordre deux pour l'aérodynamique à l'intérieur d'une telle chambre de combustion. Cette disposition est ici préférée car elle évite notamment les problèmes de cliquetis.

Un autre mode d'entrée et de guidage des gaz recyclés peut consister en des tuyaux placés dans la ou les conduites d'admission et permettant de diriger précisément l'entrée de ces gaz.

On notera qu'une entrée des gaz recyclés près de la partie supérieure des conduits d'admission permet en outre d'utiliser au mieux leur grande vitesse (due au fait qu'il existe une forte différence de pression entre l'échappement et l'admission) pour augmenter le mouvement tourbillonnaire selon un axe perpendiculaire à l'axe du cylindre, mouvement dit de "tumble".

Préférentiellement on oriente donc les gaz recyclés dans le conduit d'admission 7 de façon à ce que leur énergie cinétique favorise le mouvement de "tumble".

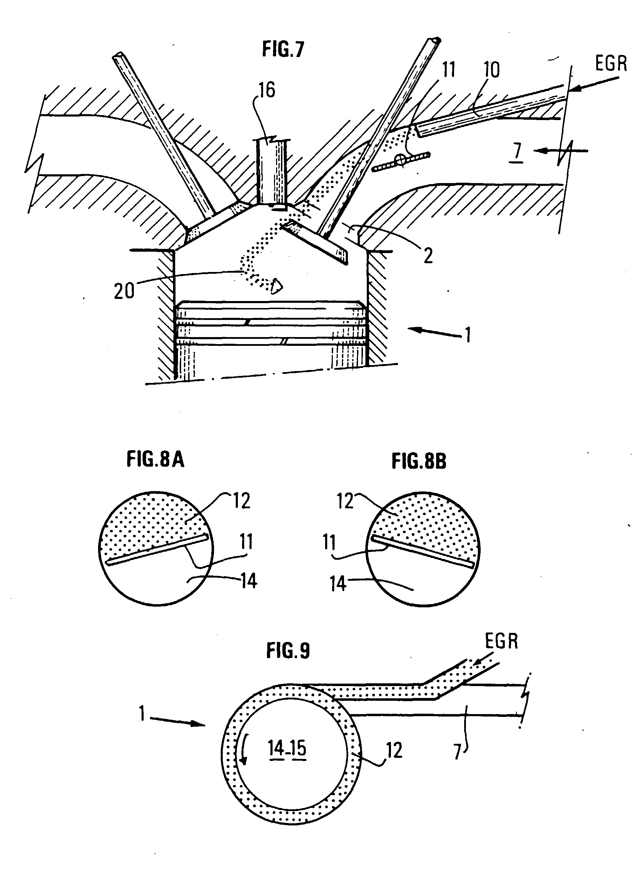

La figure 7 montre en coupe longitudinale simplifiée le mouvement dit de tumble (fléché 20) dû aux gaz recyclés.

Les figures 8A et 8B montrent différentes orientations du moyen 11 à l'intérieur du conduit d'admission 7. L'orientation de son axe de rotation sera choisie initialement, en fonction de l'aérodynamique souhaitée dans la chambre de combustion 1.

Comme il a déjà été dit, un mouvement de "tumble" est préférentiellement obtenu en faisant circuler les gaz recyclés dans la partie supérieure du conduit d'admission, comme illustré par la figure 7.

La figure 9 montre le mouvement général des gaz dans la chambre de combustion dans le cas où celui-ci consiste en une rotation autour de l'axe longitudinal du cylindre. Ce mouvement est couramment appelé "Swirl".

Selon la figure 9, la stratification obtenue est telle que les gaz recyclés (EGR) se trouvent dans une zone annulaire extérieure de la chambre de combustion; cette stratification peut être obtenue en faisant passer les gaz recyclés dans une zone externe du conduit d'admission relativement à l'axe longitudinal du cylindre. Ainsi la zone la plus riche en carburant est centrale, autour de l'axe longitudinal du cylindre et au plus près de la bougie 16.

On notera que l'introduction des gaz recyclés permet en outre de renforcer dans ce cas le mouvement de "swirl", du fait de leur grande vitesse.

On notera que le principe de la stratification radiale peut aussi dans certains cas s'appliquer aux moteurs Diesel.

Bien entendu d'autres modifications, améliorations, pourront être apportées par l'Homme de Métier à l'invention telle que décrite ci-dessus sans sortir du cadre de la présente invention.

## Revendications

1. Procédé de recyclage de gaz d'échappement à l'admission d'un moteur 4 temps à allumage commandé, caractérisé en ce qu'il consiste à injecter lesdits gaz recyclés juste en amont de la chambre de combustion et à faire circuler et à diriger les gaz recyclés (EGR) dans une zone périphérique (12) d'au moins un premier conduit d'admission (7) véhiculant simultanément de l'air, puis à faire entrer les gaz recyclés dans au moins une zone périphérique (13-13') de la chambre de combustion (1) et à y créer une stratification selon laquelle l'air et/ou le mélange carburé sont séparés par des gaz recyclés, et en ce que l'on fait varier le taux de gaz recyclés (EGR) de sorte que ladite zone périphérique (12,13) occupée par lesdits gaz recyclés dans le ou les conduits d'admission puis dans la chambre de combustion varie en fonction des conditions de fonctionnement du moteur, les gaz recyclés étant orientés dans ledit conduit d'admission de façon à ce que leur énergie cinétique renforce le mouvement tourbillonnaire des gaz dans la chambre de combustion et en ce que l'on dispose une bougie d'allumage (16) à proximité de l'axe longitudinal du cylindre.

2. Procédé selon la revendication 1, caractérisé en ce que l'on crée, dans la chambre de combustion, une stratification selon laquelle une zone (14) contenant de l'air est intercalée entre une zone (15) contenant le mélange carburé et une zone (13) contenant les gaz recyclés.

3. Procédé selon l'une quelconque des revendications précédentes, caractérisé en ce que le mouvement général des gaz dans la chambre de combustion est une rotation autour d'un axe perpendiculaire à l'axe longitudinal de la chambre de combustion, mouvement dit de tumble.

4. Procédé selon la revendication 3, caractérisé en ce que les gaz recyclés occupent une zone située autour de l'axe de rotation des gaz dans la chambre de combustion.

5. Procédé selon l'une quelconque des revendications précédentes, caractérisé en ce que les gaz recyclés (EGR) sont véhiculés dans un premier conduit d'admission (7) simultanément à de l'air, et en ce qu'un mélange carburé passe à travers un deuxième conduit d'admission (8), de telle façon que le mélange carburé occupe environ la moitié (15) de la chambre de combustion (1), l'autre moitié étant occupée à la fois par de l'air et des gaz recyclés stratifiés.

6. Procédé selon la revendication 5, caractérisé en ce que l'on dispose ladite bougie d'allumage (16) de façon légèrement décentrée vers le deuxième conduit d'admission (8).

7. Procédé selon l'une quelconque des revendications 1 à 5, caractérisé en ce que les gaz recyclés (EGR) sont véhiculés dans deux conduits d'admission (7, 8), l'un au moins desdits conduits véhiculant par ailleurs un mélange carburé.

8. Procédé selon l'une quelconque des revendications 1, ou 2, caractérisé en ce que le mouvement général des gaz dans la chambre de combustion (1) est une rotation autour de l'axe longitudinal de la chambre de combustion (1), mouvement dit de swirl.

9. Procédé selon l'une quelconque des revendications 1 à 7, caractérisé en ce que l'on oriente les gaz recyclés dans l'un au moins des conduits d'admission de façon à créer une stratification longitudinale dans la chambre de combustion (1).

10. Procédé selon l'une quelconque des revendications 8 ou 9, caractérisé en ce que les gaz recyclés sont véhiculés dans une zone externe du (ou des) conduit(s) d'admission relativement au rayon de courbure dudit conduit.

11. Procédé selon la revendication 8, caractérisé en ce que l'on oriente les gaz recyclés dans l'un au moins des conduits d'admission de façon à créer une stratification radiale dans la chambre de combustion.

12. Procédé selon l'une quelconque des revendications 8 ou 11, caractérisé en ce que les gaz recyclés sont véhiculés dans une zone externe du conduit d'admission relativement à l'axe longitudinal de la chambre de combustion (1).

13. Dispositif destiné au recyclage de gaz d'échappement à l'admission d'un moteur 4 temps à allumage commandé, comprenant un conduit (10) de liaison entre l'échappement et l'un au moins des conduits d'admission (7), caractérisé en ce que ledit conduit (10) de liaison débouche dans l'un au moins des conduits d'admission (7) juste en amont d'une ouverture d'admission et en ce qu'il comprend un moyen (11) destiné à faire circuler les gaz recyclés dans une zone périphérique (12) d'au moins un premier conduit d'admission (7), et à les orienter de façon à ce que leur énergie cinétique renforce le mouvement tourbillonnaire des gaz dans la chambre de combustion, ledit moyen permettant en outre de diriger les gaz recyclés dans au moins une zone périphérique (13) de la chambre de combustion (1) et à y créer une stratification selon laquelle l'air et/ou le mélange carburé sont séparés des gaz recyclés, en ce que ledit moyen (11) peut faire varier le taux de gaz recyclés (EGR) dans au moins un premier conduit d'admission (7) en fonction des conditions de fonctionnement du moteur et en ce qu'il comprend au moins une bougie d'allumage disposée à proximité de l'axe longitudinal du cylindre.

14. Dispositif selon la revendication 13, caractérisé en ce que ledit moyen (11) comprend un papillon dont l'axe (110) coupe perpendiculairement l'axe longitudinal de l'un au moins des conduits d'admission (7, 8).

15. Dispositif selon la revendication 14, caractérisé en ce qu'il comprend en outre un élément (17) de séparation longitudinale du conduit (7) placé, à certains moments du fonctionnement, dans le prolongement du papillon (11).

16. Dispositif selon la revendication 13, caractérisé en ce que ledit moyen (11) comprend deux demi-volets (111, 112) chacun mobile autour d'un axe (110) qui coupe perpendiculairement l'axe longitudinal de l'un au moins desdits conduits d'admission (7, 8).

17. Dispositif selon la revendication 13, caractérisé en ce que ledit moyen (11) comprend au moins un volet (114) à axe pariétal (113) perpendiculaire à l'axe longitudinal du conduit d'admission, ledit volet étant disposé au point de jonction de la tubulure (10) des gaz recyclés et du conduit d'admission (7, 8).

18. Dispositif selon la revendication 17, caractérisé en ce que ledit volet pariétal (114) permet de contrôler le débit d'EGR entrant la chambre de combustion (1).

## Patentansprüche

1. Verfahren zum Rezyklisieren von Austrittsgas an den Einlaß eines 4-Takt-Motors mit gesteuerter Zündung, dadurch gekennzeichnet, daß es darin besteht, diese rezyklierten Gase kurz vor die Brennkammer zu injizieren und die rezyklierten Gase (EGR) zirkulieren zu lassen und in eine Umfangszone (12) einer ersten Einlaßleitung (7) zu leiten, die gleichzeitig Luft führt, und dann die rezyklierten Gase in wenigstens eine Umfangszone (13-13') der Brennkammer (1) eintreten zu lassen und eine Schichtenbildung hervorzurufen, gemäß der die Luft und/oder das vergaste Gemisch durch rezyklierte Gase getrennt werden, und daß man den Anteil der rezyklierten Gase (EGR) derart variieren läßt, daß diese Umfangzone (12, 13), die von diesen rezyklierten Gasen in der oder den Einlaßleitungen, dann in der Brennkammer eingenommen wird, als Funktion der Arbeitsbedingungen des Motors variieren zu lassen, wobei die rezyklierten Gase in diese Einlaßleitung derart geführt werden, daß deren kinetische Energie die Wirbelbewegung der Gase in der Brennkammer verstärkt, und daß man eine Zündkerze (16) benachbart der Längsachse des Zylinders anordnet.

2. Verfahren nach Anspruch 1, dadurch gekennzeichnet, daß man in der Brennkammer eine Schichtenbildung hervorruft, gemäß der eine luftenthaltende Zone (14) zwischen eine Zone (15), die das vergaste Gemisch enthält und eine Zone (13), welche die rezyklierten Gase enthält, zwischengeschaltet ist

3. Verfahren nach einem der vorhergehenden Ansprüche, dadurch gekennzeichnet, daß die allgemeine Bewegung der Gase in der Brennkammer eine Rotation um eine Achse senkrecht zur Längsachse der Brennkammer ist und als sogenannte tumble-Bewegung bezeichnet wird.

4. Verfahren nach Anspruch 3, dadurch gekennzeichnet, daß die rezyklierten Gase eine Zone einnehmen, die um die Rotationsachse der Gase in der Brennkammer angeordnet ist.

5. Verfahren nach einem der vorhergehenden Ansprüche, dadurch gekennzeichnet, daß die rezyklierten Gase (EGR) in eine erste Einlaßleitung (7) gleichzeitig mit Luft transportiert werden, und daß ein vergastes Gemisch durch eine zweite Einlaßleitung (8) derart geht, daß das vergaste Gemisch etwa die Hälfte der Brennkammer (1) einnimmt, wobei die andere Hälfte gleichzeitig von Luft und geschichteten rezyklierten Gasen eingenommen wird.

6. Verfahren nach Anspruch 5, dadurch gekennzeichnet, daß man diese Zündkerze (16) leicht exzentrisch gegen die zweite Einlaßleitung (8) hin anordnet.

7. Verfahren nach einem der Ansprüche 1 bis 5, dadurch gekennzeichnet, daß die rezyklierten Gase (EGR) in zwei Einlaßleitungen (7, 8) transportiert werden, wobei wenigstens eine dieser Leitungen im übrigen ein vergastes Gemisch transportiert.

8. Verfahren nach einem der Ansprüche 1 oder 2, dadurch gekennzeichnet, daß die allgemeine Bewegung der Gase in der Brennkammer (1) eine Rotation um die Längsachse der Brennkammer (1), swirl-Bewegung genannt, ist.

9. Verfahren nach einem der Ansprüche 1 bis 7, dadurch gekennzeichnet, daß man die rezyklierten Gase in wenigstens eine der Einlaßleitungen derart führt, daß eine längsgerichtete Schichtenbildung in der Brennkammer (1) hervorgerufen wird.

10. Verfahren nach einem der Ansprüche 8 oder 9, dadurch gekennzeichnet, daß die rezyklierten Gase in eine Zone außerhalb der Einlaßleitung(en), bezogen auf den Krümungsradius dieser Leitung, transportiert werden.

11. Verfahren nach Anspruch 8, dadurch gekennzeichnet, daß man die rezyklierten Gase in wenigstens eine der Einlaßleitungen derart führt, daß eine radiale Schichtenbildung in der Brennkammer hervorgerufen wird.

12. Verfahren nach einem der Ansprüche 8 oder 11, dadurch gekennzeichnet, daß die rezyklierten Gase in eine Zone außerhalb der Einlaßleitung, bezogen auf die Längsachse der Brennkammer (1), transportiert werden.

13. Vorrichtung zur Rezyklierung von Abgas zum Einlaß eines 4-Takt-Motors mit gesteuerter Zündung, eine Leitung (10) zur Verbindung zwischen dem Auslass und wenigstens einer der Einlaßleitungen (7) umfassend, dadurch gekennzeichnet, daß diese Verbindungsleitung (10) in wenigstens eine der Einlaßleitungen (7) kurz vor einer Einlaßöffnung mündet, und daß sie ein Mittel (11) umfaßt, das dazu bestimmt ist, die rezyklierten Gase in einer Umfangszone wenigstens einer ersten Einlaßleitung (7) zirkulieren zu lassen und sie derart zu führen, daß ihre kinetische Energie die Wirbelbewegung der Gase in der Brennkammer verstärkt, wobei das Mittel es im übrigen ermöglicht, die rezyklierten Gase in wenigstens eine Umfangzone (13) der Brennkammer (1) zu leiten, um hierin eine Schichtenbildung hervorzurufen, gemäß der die Luft und/oder das vergaste Gemisch von den rezyklierten Gasen getrennt werden, und daß dieses Mittel (11) den Anteil der rezyklierten Gase (EGR) in wenigstens einer ersten Einlaßleitung (7) als Funktion der Arbeitsbedingungen des Motors variieren lassen kann, und daß sie wenigstens eine Zündkerze umfaßt ist, die benachbart der Längsachse des Zylinders angeordnet ist.

14. Vorrichtung nach Anspruch 13, dadurch gekennzeichnet, daß dieses Mittel (11) ein Klappenventil umfaßt, dessen Achse (110) die Längsachse wenigstens einer der Einlaßleitungen (7, 8) senkrecht schneidet.

15. Vorrichtung nach Anspruch 14, dadurch gekennzeichnet, daß sie im übrigen ein Element (17) zur Längstrennung der Leitung (7) umfaßt, daß zu gewissen Arbeitsaugenblicken in der Verlängerung der Ventilklappe (11) angeordnet ist.

16. Vorrichtung nach Anspruch 13, dadurch gekennzeichnet, daß dieses Mittel (11) zwei Halbklappen (111, 112), jede beweglich um eine Achse (110) umfaßt, welches senkrecht die Längsachse wenigstens einer dieser Einlaßleitungen (7, 8) schneidet.

17. Vorrichtung nach Anspruch 13, dadurch gekennzeichnet, daß dieses Mittel (11) wenigstens eine Klappe (114) mit Achse am Umfang (113) senkrecht zur Längsachse dieser Einlaßleitung umfaßt, wobei diese Klappe am Verbindungspunkt des Stutzens (10) für die rezyklierten Gase und der Einlaßleitung (7, 8) angeordnet ist.

18. Vorrichtung nach Anspruch 17, dadurch gekennzeichnet, daß diese Klappe am Umfang (114) es ermöglicht, die EGR-Menge, die in die Brennkammer (1) eintritt, zu regeln.

## Claims

1. Process for recycling exhaust gases to the inlet of a four-stroke spark-ignition engine, characterised in that it consists of injecting said recycled gases just upstream of the combustion chamber and circulating and directing the recycled gases (EGR) into a peripheral zone (12) of at least a first inlet port (7) simultaneously conveying air, then introducing the recycled gases into at least one peripheral zone (13-13') of the combustion chamber (1) and creating therein a stratification according to which the air and/or the carburetted mixture are separated by recycled gases, and in that the level of recycled gases (EGR) is varied such that said peripheral zone (12, 13) occupied by said recycled gases in the inlet port or ports then in the combustion chamber varies as a function of the operating conditions of the engine, the recycled gases being oriented in said inlet port such that their kinetic energy reinforces the turbulent motion of the gases in the combustion chamber, and in that a spark plug (16) is disposed close to the longitudinal axis of the cylinder.

2. Process according to claim 1, characterised in that in the combustion chamber a stratification is created according to which a zone (14) containing air is located between a zone (15) containing the carburetted mixture and a zone (13) containing the recycled gases.

3. Process according to any one of the preceding claims, characterised in that the general motion of the gases in the combustion chamber is a rotation about an axis perpendicular to the longitudinal axis of the combustion chamber, said motion being referred to as tumble.

4. Process according to claim 3, characterised in that the recycled gases occupy a zone situated about the axis of rotation of the gases in the combustion chamber.

5. Process according to any one of the preceding claims, characterised in that the recycled gases (EGR) are conveyed into a first inlet port (7) simultaneously with air, and in that a carburetted mixture passes through a second inlet port (8), such that the carburetted mixture occupies roughly one half (15) of the combustion chamber (1), the other half being occupied both by air and by stratified recycled gases.

6. Process according to claim 5, characterised in that said spark plug (16) is disposed slightly off-centre towards the second inlet port (8).

7. Process according to any one of claims 1 to 5, characterised in that the recycled gases (EGR) are conveyed into two inlet ports (7, 8), at least one of said ports additionally conveying a carburetted mixture.

8. Process according to any one of claims 1 or 2, characterised in that the general motion of the gases in the combustion chamber (1) is a rotation about the longitudinal axis of the combustion chamber (1), said motion being referred to as swirl.

9. Process according to any one of claims 1 to 7, characterised in that the recycled gases are oriented in at least one of the inlet ports so as to create a longitudinal stratification in the combustion chamber (1) .

10. Process according to any one of claims 8 or 9, characterised in that the recycled gases are conveyed into a zone outside the inlet port or ports relative to the radius of curvature of said port.

11. Process according to claim 8, characterised in that the recycled gases are oriented in at least one of the inlet ports so as to create a radial stratification in the combustion chamber.

12. Process according to any one of claims 8 or 11, characterised in that the recycled gases are conveyed into a zone outside the inlet port relative to the longitudinal axis of the combustion chamber (1).

13. Device designed for recycling of exhaust gases to the inlet of a four-stroke spark-ignition engine, comprising a connecting port (10) between the exhaust and at least one of the inlet ports (7), characterised in that said connecting port (10) debouches into at least one of the inlet ports (7) just upstream of an inlet opening, and in that it comprises a means (11) designed to circulate the recycled gases in a peripheral zone (12) of at least a first inlet port (7), and to orient them such that their kinetic energy reinforces the turbulent motion of the gases in the combustion chamber, said means additionally making it possible to direct the recycled gases into at least one peripheral zone (13) of the combustion chamber (1) and create therein a stratification according to which the air and/or the carburetted mixture are separated from the recycled gases, in that said means (11) can vary the level of recycled gases (EGR) in at least a first inlet port (7) as a function of the operating conditions of the engine, and in that it comprises at least one spark plug disposed close to the longitudinal axis of the cylinder.

14. Device according to claim 13, characterised in that said means (11) comprises a butterfly the axis (110) of which perpendicularly intersects the longitudinal axis of at least one of the inlet ports (7, 8).

15. Device according to claim 14, characterised in that it additionally comprises an element (17) for longitudinal separation of the port (7) placed, at certain operating moments, in the extension of the butterfly (11) .

16. Device according to claim 13, characterised in that said means (11) comprises two half flaps (111, 112) each of which can move about an axis (110) which perpendicularly intersects the longitudinal axis of at least one of said inlet ports (7, 8).

17. Device according to claim 13, characterised in that said means (11) comprises at least one flap (114) with a parietal axis (113) perpendicular to the longitudinal axis of the inlet port, said flap being disposed at the point of junction of the tubing (10) for the recycled gases and the inlet port (7, 8).

18. Device according to claim 17, characterised in that said parietal flap (114) makes it possible to control the EGR flow into the combustion chamber (1).
